# EUROPÄISCHE PATENTSCHRIFT

(11) **EP 0 909 941 B1**
(45) Veröffentlichungstag und Bekanntmachung des Hinweises auf die Patenterteilung: **20.06.2001**
(21) Anmeldenummer: 98115926.2
(22) Anmeldetag: 24.08.1998
(51) Int. Cl.: G01M 15/00, G01N 21/35

(54) **Infrarot Kraftfahrzeug Abgasanalyse mit Nullpunkteinstellung oder Temperaturdriftkorrektur**
Infrared analysis of motor vehicle exhaust with zero point adjustment or correction of temperature drift
Analyse à infrarouge des gaz d'échappement de vehicules à moteur avec ajustement du point zéro ou correction de l'influence de la temperature

(30) Priorität: 25.08.1997 DE 19736864; 12.05.1998 DE 19821136; 06.08.1998 DE 19835537; 04.10.1997 DE 19743954; 11.09.1997 DE 19739869; 14.07.1998 DE 19831457
(43) Veröffentlichungstag der Anmeldung: 21.04.1999
(73) Patentinhaber: WISSENSCHAFTLICHE WERKSTATT FÜR UMWELTMESSTECHNIK GmbH, D-20459 Hamburg (DE)
(72) Erfinder: Garms, Stephan, 22399 Hamburg (DE); Palocz-Andresen, Michael dr., 20459 Hamburg (DE); Schroll, Stefan, 22089 Hamburg (DE)

(56) Entgegenhaltungen:
- EP-A- 0 417 884
- EP-A- 0 781 988
- DE-A- 4 121 520
- DE-A- 19 605 053
- US-A- 5 709 082

## Beschreibung

Die Erfindung betrifft Vorrichtungen zur Analyse der im Abgas von Kraftfahrzeugen befindlichen wichtigsten umweltrelevanten substanzen.

Die Abgase von Personen- und Nutzfahrzeugen verursachen vielfältige Umweltbelastungen. Durch die Einführung von Grenzwertvorschriften für die Begrenzung der Abgasemissionen wurden und werden die Hersteller von Kraftfahrzeugen gezwungen, die Emissionen des einzelnen Fahrzeugs, z.B. durch Weiterentwicklung von Motor und Abgassystem, zu reduzieren.

Eine Verschlechterung des Abgasverhaltens über die Lebensdauer des Fahrzeuges, die sich hauptsächlich durch eine graduelle Emissionserhöhung durch Alterung, z.T. aber auch durch fehlerhafte Komponenten im Antriebs- und Abgasminderungssystem, ergibt, kann der Grund sein, daß diese Grenzwertvorschriften nicht eingehalten werden.

Üblicherweise wird durch regelmäßige Abgasuntersuchungen versucht, einen dem Ursprungszustand vergleichbaren Emissionsstand zu gewährleisten. Nachteilig daran ist, das ein Defekt erst zur nächsten Abgasuntersuchung erkannt wird und bis dahin hohe Emissionen ausgestoßen werden.

In den ersten Sekunden des Kraftfahrzeugbetriebes, wenn der Katalysator seine Betriebstemperatur noch nicht erreicht hat, ist die Schadstoffminderung des Abgases durch den Katalysator noch sehr niedrig. Da der Motor in der Kaltstartphase etwa 70% seiner gesamten Emissionen produziert, wäre jedoch eine optimale Schadstoffminderung gerade in dieser Phase, die eine derzeitige Abgasuntersuchung überhaupt nicht erfassen kann, wünschenswert.

### Stand der Technik

Ein neuer Ansatz für die Verringerung des Schadstoffausstoßes ist die. On-Board-Diagnose" (OBD). Darunter versteht man ein System zur Emissionskontrolle durch Überwachung der Funktionstüchtigkeit der einzelnen, abgasrelevanten Bauteile eines Personen- oder Nutzfahrzeuges durch Sensoren. In den USA gibt es schon länger eine erste Form der OBD für Pkw (OBD I-Gesetz), das ab dem Modelljahr 1995 schrittweise durch das weitergehende OBD II-Gesetz abgelöst wird. Während die OBD I nur die Kontrolle der Funktionstüchtigkeit der Komponenten, die mit der elektronischen Motorsteuerung in Verbindung stehen, vorsieht, verlangt die OBD II die Überwachung aller emissionsrelevanten Bauteile. Ausdrücklich gefordert wird die Überwachung von Katalysator, Lambda-Sonde, Kraftstoffsystem, Sekundärluftsystem. Abgasrückführung, Tankentlüftung und die Erkennung von Verbrennungsaussetzem. Bei Feststellung des Ausfalls bzw. der Fehlfunktion einer Komponente wird eine Signallampe am Armaturenbrett eingeschaltet und ein Fehlercode gespeichert. Die festgestellte Fehlfunktion soll möglichst genau lokalisiert, beschrieben und die Information gespeichert werden, so daß sie von der Reparaturwerkstatt über eine normierte Schnittstelle für eine schnelle Identifikation und Reparatur des Fehlers ausgelesen werden kann.

Einen weitergehenden Ansatz stellt die Anwendung eines "On-Board-Measurement" (OBM) vor. Systeme zur direkten Analyse der Emission von Kraftfahrzeugen sind in vielfältiger Weise bekannt. Nur exemplarisch wird auf die deutschen Offenlegungsschriften 32 32 416, 33 39 073, 36 08 122, 37 16 350, 39 32 838, 40 05 803, 41 24 116, 42 35 225, 43 07 190, die DE 43 19 282 C1, die US-Patentschriften 4 803 052 und 5 281 817, sowie auf die weiteren Anmeldungen GB 2 264 170 A, EP 0 196 993 A2 und WO 94/09266 verwiesen. Auf diese Druckschriften wird im übrigen zur Erläuterung aller hier nicht im einzelnen beschriebenen Details ausdrücklich Bezug genommen.

Die Anmeldungen US-A-5 475 223 und DE-A1-19605053 befassen sich im engeren Sinne mit benachbarten Themengebieten und werden aus diesem Grunde ausführlicher behandelt. So beschreibt das Patent US-A-5 475 223 eine infrarote Meßvorrichtung, die den Betriebszustand des Katalysators in der Form überwacht, daß sie seitlich in den Katalysator hineinschaut und durch eine Öffnung die im Katalysator herrschende Gasatmosphäre bestimmt. In /2/ wird eine schnell zu taktende Meßvorrichtung dargestellt, die durch Hintereinanderschalten mehrerer infraroter Küvetten eine zeitliche Auflösung von 0,1-0,2 s ermöglicht. Beide Quellen geben keine Hinweise für die kontinuierliche Messung des Schadstoffausstoßes hinter dem Katalysator im Auspuffsystem.

Aus den Literaturquellen ist zu entnehmen, daß momentan kein Meßsystem in der Lage ist, die tatsächliche Emission in der Kaltstartphase und im Betrieb ständig zu erfassen, um alle Abweichungen aufzuzeichnen und Fehler zu signalisieren.

Zukünftige Fahrzeuge werden zur Abgasanalyse ein integriertes OBM-System besitzen. Dabei werden bestimmte Anteile des Abgases analysiert. Durch Vergleich von momentanen Konzentrationsverläufen mit gespeicherten Soll-Kennlinien kann auf einen Fehler im Verbrennungssystem geschlossen werden. Eine Warnung wird dann ausgelöst, wenn ein für den jeweiligen Autotyp gespeicherter und als "gut" gefundener Verlauf lang anhaltend, wiederholt und eindeutig überschritten wird. "Langanhaftend" bedeutet eine größere Zeit lang, "wiederhoft" bedeutet, daß die Überschreitung nicht einmal, sondern mehrmals auftritt, und "eindeutig" bedeutet, daß die Konzentration die vorgegebene Fensterbreite des Toleranzbandes verlassen hat. Diese Kriterien dienen der Absicherung der Analyse und sorgen dafür, daß keine Falschmeldung abgegeben wird.

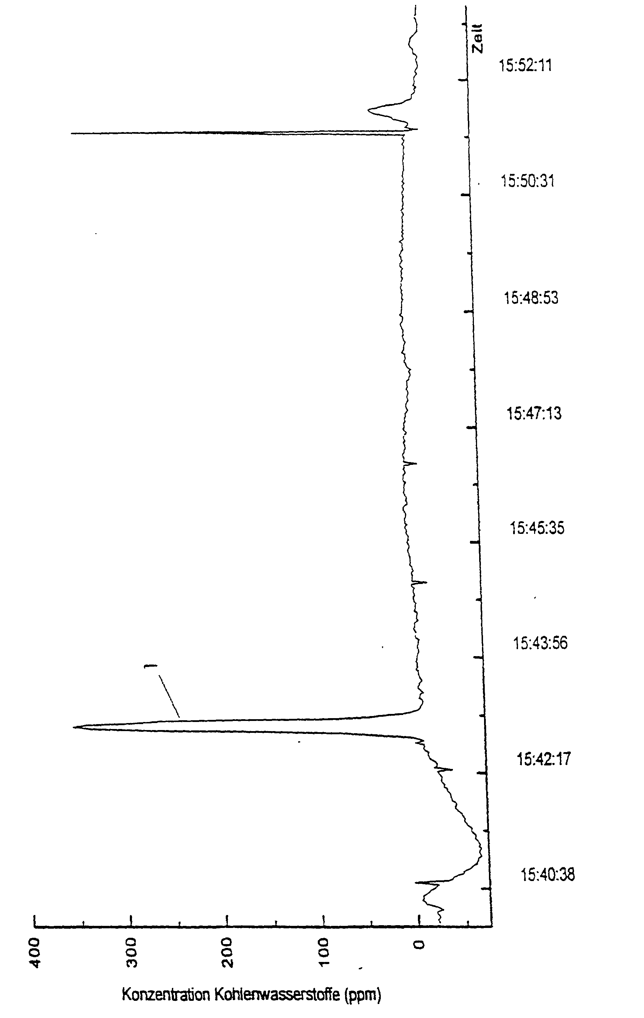

Fig.1 zeigt exemplarisch, wie die Schadstoffkonzentration durch Fehler im Verbrennungssystem, hier Zündaussetzer (1), beeinflußt wird.

Die Messung der Abgase wird durch die schwankenden Bedingungen im Kraftfahrzeug erschwert. Zum einen muß ein Meßsystem die allgemeinen, für ein Kraftfahrzeug gültigen Toleranzgrenzen und Anforderungen einhalten und andererseits sind gerade die Abgaseigenschaften Druck, Feuchte, Temperatur und Durchfluß starken Schwankungen unterworfen, die die Konzentrationsmessung beeinflussen. Bei der Lösung dieser Aufgabe benötigt man besonders robuste, mikrosystemtechnische Bauteile sowohl für die Abgasaufbereitung als auch für die Messung der Abgaskomponenten.

Eine Vorrichtung zur Analyse des Abgases von Kraftfahrzeugen ist aus der DE 196 05 053 A1 bekannt. Bei dieser Vorrichtung treten jedoch, wie auch bei den in den weiteren Druckschriften beschriebenen Meßgeräten, in der geforderten Anwendung Probleme auf. Wegen der in einem Kraftfahrzeug auftretenden Erschütterungen muß das Meßsystem sehr stabil gebaut und darüber hinaus unempfindlich gegenüber Ruß-, Staub- und Aerosolablagerungen sein. Dennoch muß eine hohe Auflösung erreicht werden, da die Konzentrationen der zu messenden Bestandteile des Abgases, wie Kohlenmonoxid (CO), Kohlenwasserstoffe (HC) und Stickoxide (NO), gerade bei katalysatorbestückten Otto-Motor-Kraftfahrzeugen, sehr niedrig sind.

Die Vorrichtungen nach der Erfindung sind in den unabhängigen Ansprüchen 1 und 2 angegeben.

Die Figuren zeigen :

Fig.1: Schadstoffkonzentrationsverlauf bei einem Zündaussetzer Fig.2: Prinzipieller Einbau des OBM-Systems im Kraftfahrzeug Fig.3: Gaslaufplan der Abgasaufbereitung Fig.4: Prinzipieller Aufbau des Nachrüstbausatzes Fig.5: Unterbringung des Nachrüstbausatzes im Kofferraum Fig.6: Kaltstartmessung Fig.7: Nullinienkorrektur Fig.8: Kohlendioxidkonzentration in der Außenluft Fig.9: Ableitung als Korrekturfunktion Fig.10: Korrektur der Signalhöhen

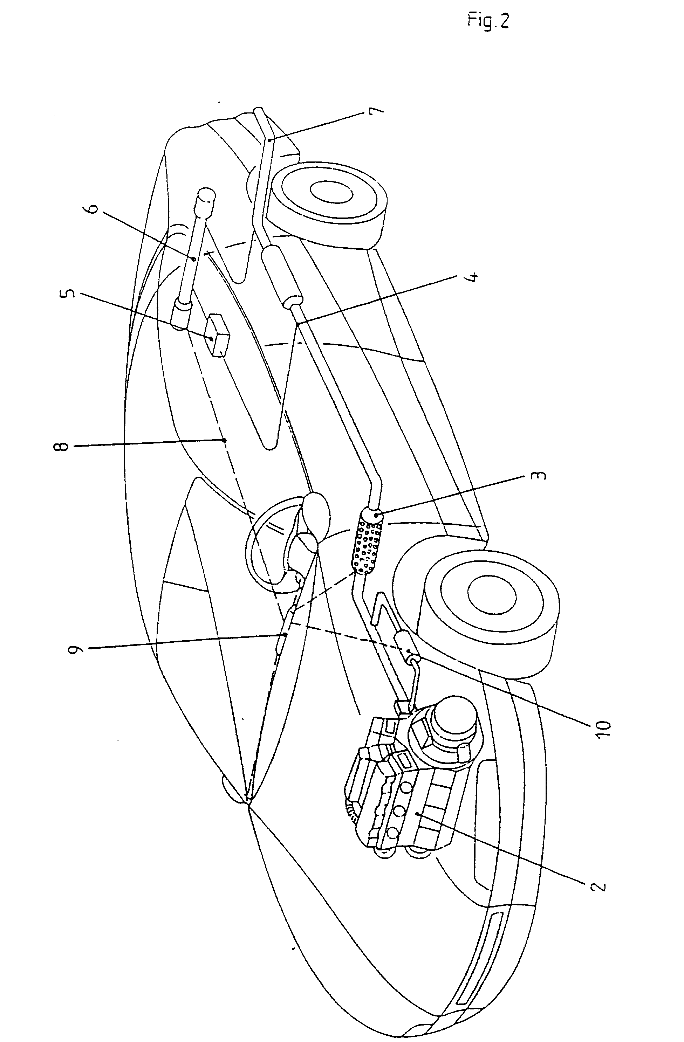

Den prinzipiellen Einbau des OBM-Systems in ein Kraftfahrzeug sowie die wichtigsten Komponenten des Verbrennungssystems zeigt Fig.2. Der Motor (2) als Verbrennungskraftmaschine produziert Abgas, im Katalysator (3) erfolgt die Umwandlung von Schadstoffen in minder giftige Substanzen. Die Entnahmestelle (4), die Abgasaufbereitung (5), die Analysevorrichtung (6), die Auspuffanlage (7) sowie die Datenleitung (8) zur Verbindung der Anzeigeeinheit (9) mit der Analysevorrichtung (6) bilden das OBM-System im Kraftfahrzeug.

Die Entnahme des Abgases aus dem Auspuff des Kraftfahrzeuges erfolgt hinter dem Katalysator, da nur so eine Aussage über den Zustand des gesamten Verbrennungssystems und des Katalysators gemacht werden kann.

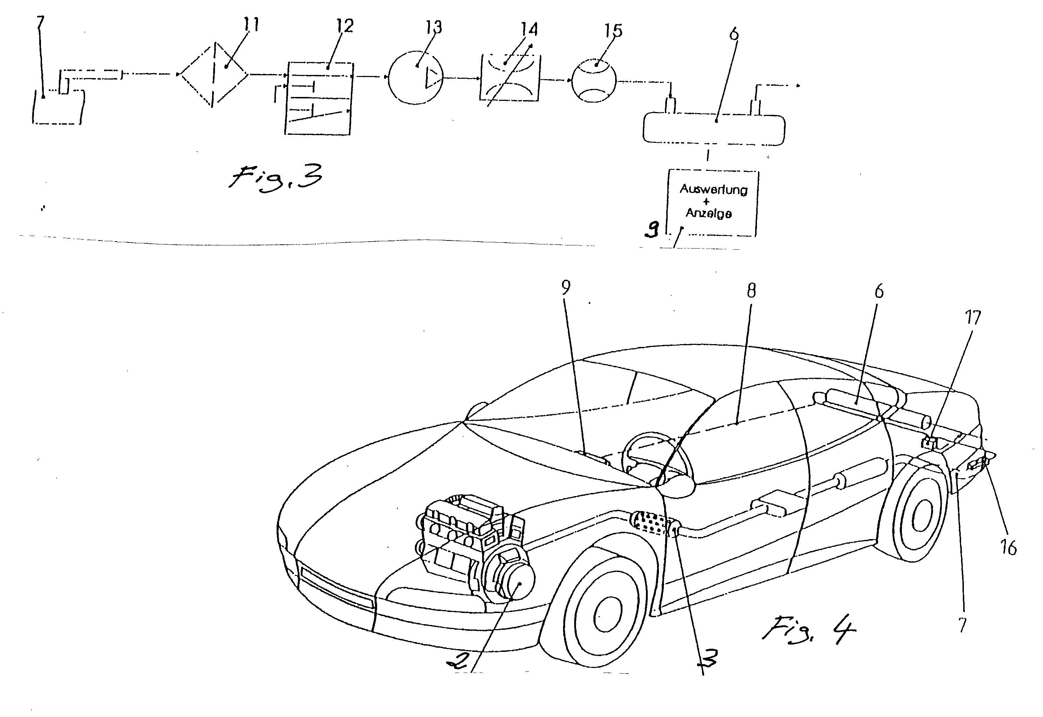

Die Abgasaufbereitung ist als Gaslaufplan in Fig.3 dargestellt. Das Abgas wird mit einem auswechselbaren Abgasfilter (11) von Ruß und Partikeln gesäubert. Ein Magnetventil (12) dient der Umschaltung zwischen Abgas und Kalibriergas (s. Kap.7). Die Meßgaspumpe (13) befördert das zu messende Gas durch den Druckminderer (14) und einen Durchfiußmesser (15) in die Analysevorrichtung (6).

Die Abgasanalyse erfolgt nach dem Prinzip der infraroten Gasabsorption in der Analysevorrichtung (Küvette). Diese besteht aus einer Infrarotquelle (transparenter Kolben), deren Strahlung durch eine Meßstrecke (Küvette) auf einen Meßkopf trifft. Die Küvette kann dabei aus einem geraden, hochreflektierenden Rohr oder aus mehreren Rohren mit Spiegelköpfen, die die Strahlung reflektieren, bestehen. Im Meßkopf sind zwei pyroelektrische Meßfühler untergebracht, die mit verschiedenen optischen Filtern bestückt sind und ein meßgasabhängiges und ein Referenz-Signal erzeugen. Die Bildung des Quotienten dieser Signale verringert die Störeinflüsse (Temp., Druck, Verschmutzung, Alterung) auf das Meßsignal. Die Verwendung des pyroelektrischen Prinzips erfordert eine getaktete Strahlungsquelle. Ein elektrischer Takt auf die Strahlungsquelle vermeidet anfällige mechanische Komponenten (Chopper). Die Robustheit des Meßsystems wird dadurch erhöht, daß die Küvette (Meßstrecke) aus Edelstahl besteht. Sollte die Vorrichtung verschmutzen oder Teile davon ausfallen, ist es von Vorteil, daß die Vorrichtung modular aufgebaut ist und einzelne Komponenten, z.B. der Filter, einfach ausgetauscht werden können.

### Nachrüstbausatz zur Abgasanalyse in älteren Kraftfährzeugen

Bei älteren Kraftfahrzeugen, in denen noch kein OBD- oder OBM-System vom Hersteller direkt ins Kraftfahrzeug eingebaut ist, kann die Funktionstüchtigkeit von Motor und Abgasnachbehandlung nicht außerhalb der Abgasuntersuchung nicht überprüft werden. Deshalb sollte eine Möglichkeit zum Nachrüsten vorhanden sein.

Nachteilig beim Nachrüsten von OBD sind die vielen Meßwertaufnehmer, für die kein Platz und keine Anschlüsse in der Elektronik vorgesehen sind. Deshalb ist der Einbau eines On-Board-Meßsystems günstiger.

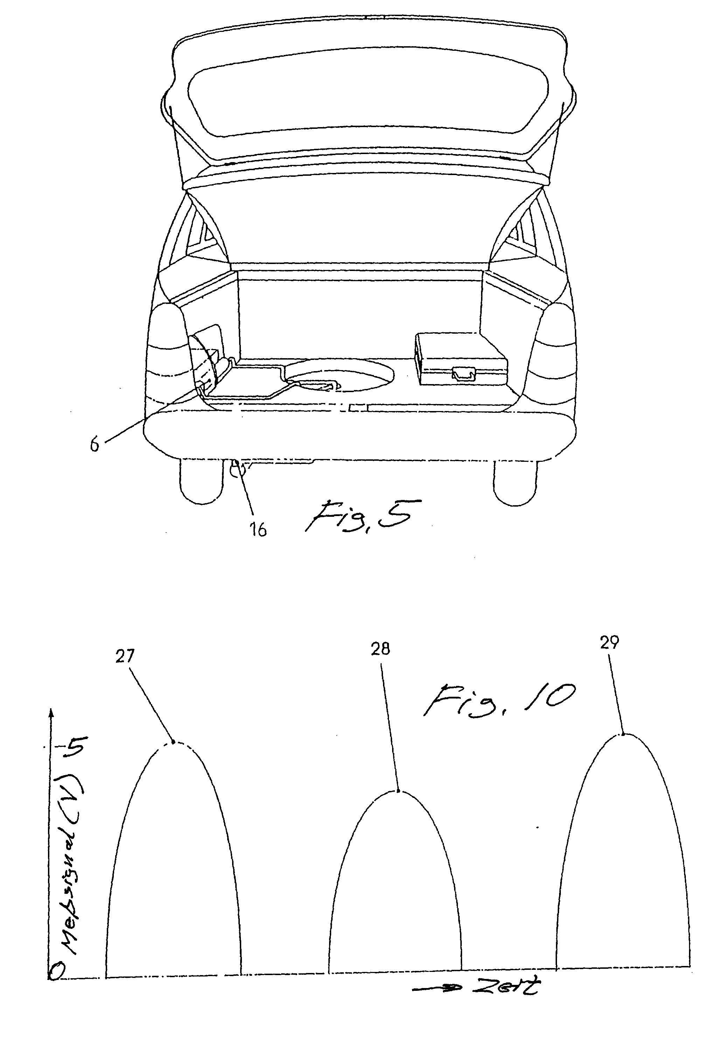

In Figur 4 ist ein solches modulares OBM-Nachrüstsystem abgebildet. Die Abgasentnahme erfolgt mit einer Entnahmesonde (16), die am Auspuffende befestigt wird. Das Gas wird in einer Abgasaufbereitung (17) gereinigt, getrocknet und weiter in die Analysevorrichtung (6) gepumpt Die Anzeigeeinheit (9) am Armaturenbrett zeigt dann Informationen über den Zustand und Betrieb des OBM-Systems an.

Die Unterbringung des Nachrüstbausatzes im Kraftfahrzeug wird in Fig.5 dargestellt. Dabei wird die Entnahmesonde (16) am Auspuffende befestigt Die Analysevorrichtung (6) und die Gasaufbereitung (17) können im Kofferraum untergebracht werden. Die Anzeigeeinheit (9) kann ans Lüftungsgitter gehängt oder anderweitig am Armaturenbrett befestigt werden.

### Kaltstartmessung und Adsorptionsfalle

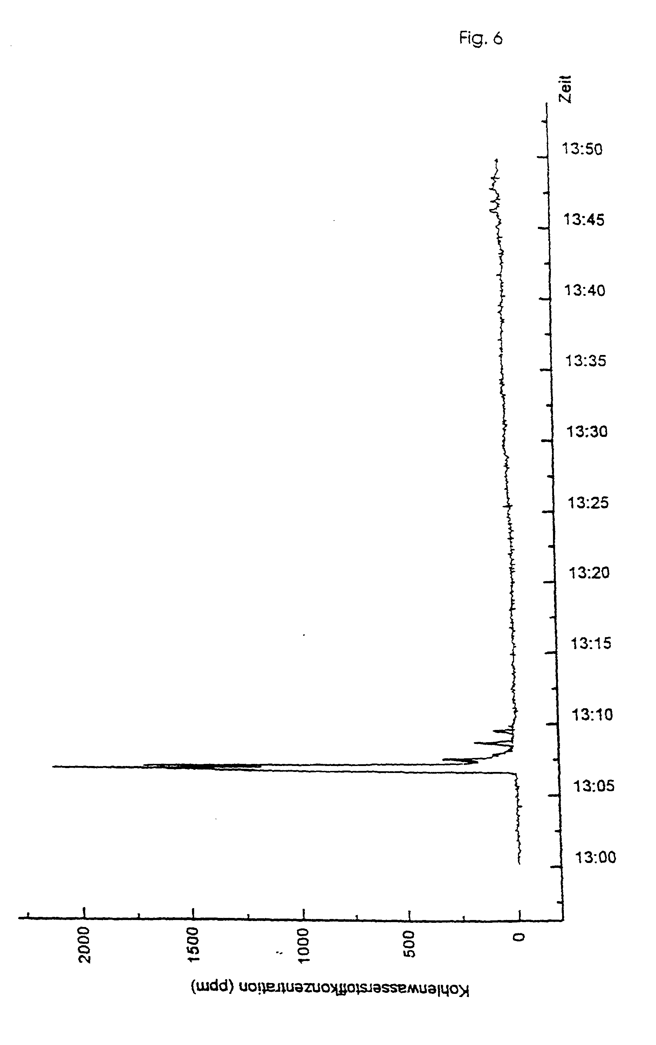

In der Kaltstartphase werden 70 % der gesamten Emissionen des Motors abgegeben, s. Fig.6. Mit dem On-Board-Meßsystem werden auch diese Emissionen gemessen. Anhand dieser Werte kann eine HC-Adsorptionsfalle (10, s. Fig.2) zum Auffangen der Kaltstartemissionen in den Abgasweg geschaltet werden. Durch die Abgasmessung erhält man die Möglichkeit, die Adsorptionsfalle zu den optimalen Zeitpunkten in den Abgasweg zu schalten bzw. die Desorption einzuleiten. Die Desorption der zurückgehaltenen Kohlenwasserstoffteilchen erfolgt dann, wenn der Katalysator eine Temperatur erreicht hat, bei der eine zufriedenstellende Konvertierung gesichert ist.

Da das Kaltstart-Meßsystem nur einen geringen Energiebedarf hat, kann es bereits vor der Kaltstartphase in Betrieb genommen werden. Die Steuerung kann z.B. durch einen Sitzbeiegungssensor oder einen Sensor am Zündschloß erfolgen, durch den auch die HC-Adsorptionsfalle (10) in den Abgasweg geschaltet werden kann.

### Nullinienkalibrierung

Das Meßprinzip der infraroten Gasabsorption ist hinlänglich bekannt. Die Probleme, die dieses Meßprinzip unter wechselnden Umweltbedingungen hat, wurden bereits in Punkt 3 beschrieben. Die Korrektur der Messung durch verschiedene Verfahren wird nachfolgend beschrieben.

Häufigstes Problem ist die Verschiebung des Nullpunktes, das heißt, daß bei der Messung von unbelastetem Gas der ermittelte Meßwert nicht Null ist. Lösung dieses Problems ist eine häufige Kalibrierung des Systems mit Umgebungsluft nach folgender Methode:

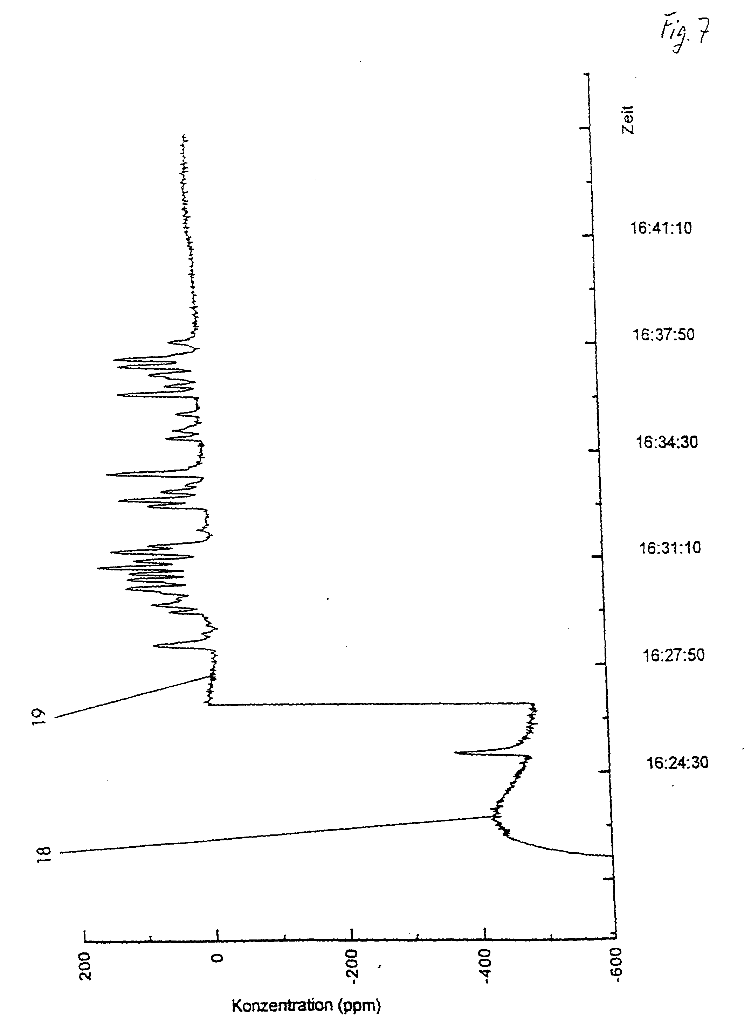

Das Magnetventil (12) in der Abgasaufbereitung (5,17) wird nach einer vorher bestimmten Zeit oder Aufgrund gemessener äußerer Einflüsse automatisch umgeschaltet, so daß Außenluft in die Analysevorrichtung (6) gelangt In der Außenluft sind die Konzentrationen an CO, HC und NO so gering, daß man sie mit genügender Genauigkeit als Nullgas betrachten kann. Durch einen mathematischen Abgleich wird die Nuilinie korrigiert. Dadurch ergibt sich, daß neben der Nuilinie im allgemeinen auch die Empfindlichkeiten wieder ihren richtigen Wert erreichen und somit das System wieder reproduzierbare Werte anzeigt. Fig. 7 zeigt die Wirkung dieser Nullinienkorrektur. Man sieht die durch Temperaturdrift verschobene Nullinie (18) sowie die nach der Kalibrierung wieder korrekte Meßkurve (19). Dieser Vorgang mit einer Unterbrechung der Aufzeichnung der Emission hat keinen nennenswerten Einfluß auf die Aussagefähigkeit der Messung, die sowieso nicht die absolute Kontinuität der Beobachtungen, sondern die Erkennung von Fehlem im Abgassystem zum Ziel hat.

### Einstellung der Empfindlichkeit der Meßsignale mit Hilfe der CO₂-Konzentration der Außenluft

Das unter Punkt 7 beschriebene Verfahren zur Nullinienkalibrierung hat den Vorteil, daß eine ständige Empfindlichkeitsjustierung entfallen kann, da sich bei diesem Verfahren die richtigen Korrekturen auch für den Empfindlichkeitspunkt (und damit alle anderen) ergeben. Trotzdem ist auch eine Kontrolle der Empfindlichkeit nach folgendem Verfahren möglich:
Der CO₂-Gehalt der Atmosphäre hat weltweit einen mittleren Wert von 350 ppm (in sauberer Luft, außerhalb von Städten). Diesen Tatbestand kann man für die Empfindlichkeitskontrolle nutzen, da diese Konzentration gut zu den Meßbereichen der sonst zu erfassenden Bestandteile im Abgasstrom paßt. CO, HC vor allem aber NO haben zwar schwächere Absorptionsbanden als CO₂, dafür aber höhere Spitzenwerte in der Konzentration. Nach der Lambert-Beerschen Gleichung kann deshalb die gleiche Küvettenlänge, praktisch die gleiche Küvette, benutzt werden. Wenn der Abgasanalysevorrichtung (6) nun unbelastete Außenluft zugeführt wird, muß, nachdem die oben beschriebene Nullpunkteinstellung durchgeführt wurde, das System die mittlere CO₂-Konzentration anzeigen. Man kann dann mit genügender Sicherheit davon ausgehen, daß auch für die anderen Meßkanäle der Empfindlichkeitspunkt stimmt.

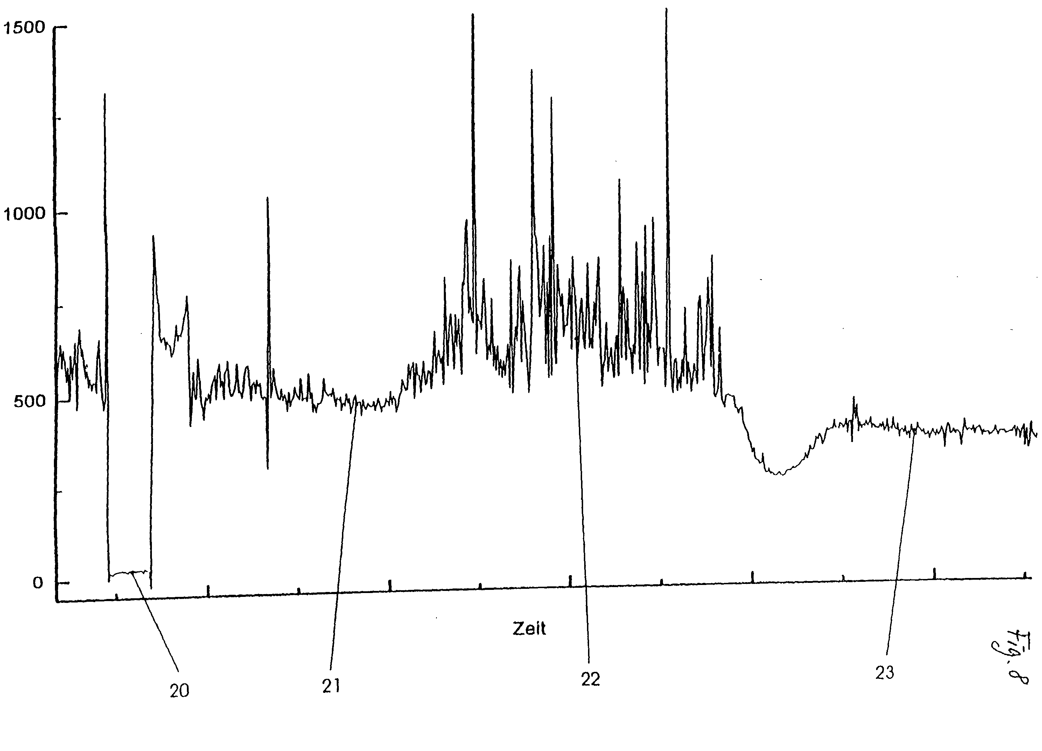

Nachteilig an der oben beschriebenen Methode ist, daß die örtliche CO₂-Konzentration durch äußere Einflüsse stark schwankt. Besonders in Ballungszentren ist, bedingt durch den Straßenverkehr, die CO₂-Konzentration sehr hoch. Fig.8 zeigt die Kohlendioxidkonzentration in der Außenluft während einer Meßfahrt. Nach der Justierung des Nullpunktes durch synthetische Luft (20) erfolgte die Fahrt durch eine kieine Gemeinde (21) mit einer relativ gleichmäßigen CO₂-Konzentration. Die Fahrt durch eine größere Stadt (22) mit Kreuzungen und Ampeln zeigt hohe, stark schwankende CO₂-Konzentrationen. Die Messung in einem ruhigen Innenhof (23) schließlich kommt der natürlichen CO₂-Konzentration nahe.

### Einstellung der Empfindlichkeit durch die CO₂-Konzentration im Abgas

Als möglicher Ausweg aus der unter Punkt 8 beschriebenen Schwierigkeit, die sich aus der Schwankung der natürlichen CO₂-Konzentration ergibt, empfiehlt sich die Beobachtung der CO₂-Konzentration im Abgasstrom des Kraftfahrzeuges. Dieser Wert ist durch den Verbrennungsvorgang relativ stabil, so daß diese Konzentration als Vergleichswert zur Einstellung der Empfindlichkeit der einzelnen Meßkanäle benutzt werden kann. Durch die hohe Konzentration von CO₂ (12 Vol%) im Abgas muß allerdings die Anordnung des CO₂-Strahlenganges in der Meßküvette anders erfolgen als für die anderen Schadgase. Grundsätzlich muß der optische Weg für die CO₂-Messung wesentlich kürzer sein als für die Schadgase CO, NO und HC.

### Korrektur der durch Temperaturschwankungen bedingten Verschiebungen der Nullinie von Meßsignalen durch ein softwaretechnisches Filter

Normalerweise erfolgt die Ermittlung eines Meßwertes durch die Bildung des Quotienten aus dem Signal für die Schadstoffkomponente (Meßsignal) und dem Referenzsignal.

Die Signalverläufe von Meßsignal und Referenzsignal weisen eine große Ähnlichkeit auf. Deshalb kann man das Quotientenverfahren insofern modifizieren, daß man einen gewissen Toleranzbereich um den Signalverlauf festlegt und innerhalb dieses Bereichs den Quotienten zu "eins" setzt. Damit erhält man einen Bereich für die Null-Konzentration, und nur wenn dieser Toleranzbereich verlassen wird, wird eine Konzentration entsprechend den Werten des dann bestimmten echten Quotienten angezeigt. Hinweis: Das Korrespondieren der Konzentration "Null" mit dem Quotienten "Eins" ist nicht zwingend notwendig, erzielt im allgemeinen aber das beste Meßergebnis.

### Kompensation der Temperaturdrift durch Betrachtung der Dynamik der Signalverläufe

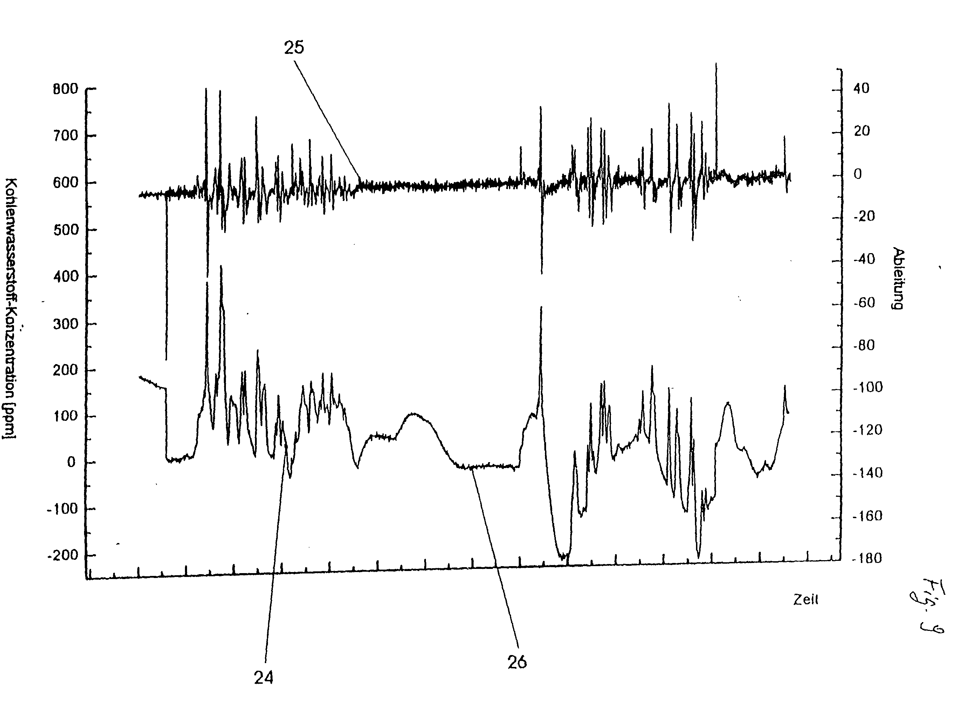

Da in Kraftfahrzeugen erfahrungsgemäß extrem dynamische Bedingungen (zeitlich schnelle Veränderung im System, verglichen mit der Taktzeit des Strahlers) herrschen, kann man die echten, d.h. vom Abgas erzeugten, Meßsignale gut von den langsamer schwingenden, temperaturbedingten Schwankungen unterscheiden. Zur Korrektur muß man die erste Ableitung des Konzentrationsverlaufs nach der Zeit bilden. Die erste Ableitung erfaßt nur echte Sprungfunktionen, die z.B. beim Gasgeben im Kraftfahrzeug entstehen. In Fig.9 ist ein konkreter Meßwertveriauf dargestellt. Von dem Original-Meßsignal der Schadstoffkomponente HC (24) wurde die erste Ableitung (25) gebildet. Deutlich zu sehen ist, daß die durch Temperatureinflüsse hervorgerufenen Meßsignalschwankungen (26) in der Ableitung (25) gegen Null gehen.

Hat man die Stetten der Sprungfunktionen aus der ersten Ableitung nach der Zeit gefunden, so kann man die Punkte mit Sprungeigenschaften eindeutig erkennen. Tritt ein solcher echter Sprung auf, d.h. hebt sich ein Meßwert eindeutig aus dem vorher definierten Toleranzband mit einer zugelassenen Breite aus der Differentialkurve hervor, so muß von diesem Punkt an die echte Konzentrationskurve zur Auswertung herangezogen werden. Beim Zurückkehren der ersten Ableitung auf den Nullpunkt wird die Nullinie wieder als eine unveränderte, stabile Linie aus dem softwaretechnischen Filter ausgegeben. Man hat also während der Fahrt entweder eine absolute Nullinie, ohne Schwankungen, weil keine Sprungfunktionen aufgetreten sind und die temperaturbedingten Schwankungen vernachlässigt werden, oder beim Auftreten von echten, dynamischen Sprungfunktionen, z.B. beim Gasgeben, Gangwechseln, Bremsen, etc. werden nach der ersten Ableitung die Originalmeßsignale betrachtet, die aus dem Konzentrationsverlauf gewonnen werden.

### Einstellung der Original-Signalgrößen in den Kanälen des IR Gasanalysators

Eine weitere Korrekturmethode besteht in der Nachstellung der Signalhöhen durch eine elektronisch einstellbare Verstärkungsregelung.

Da die Referenzbande bei der infraroten Gasabsorption so ausgelegt wird, daß bei ihrer Bande grundsätzlich keine Absorption erfolgt, müßte das Meßsignal des Referenzkanals des Infrarotdetektors immer die ursprüngliche Größe besitzen. Durch Temperatureinflüsse und Alterung schwankt aber dieses Signal im Kraftfahrzeug doch beachtlich.

Um die temperaturbedingten Schwankungen der Signale zu kompensieren, besteht die Möglichkeit, das Referenzsignal durch die systemeigene Meß-Steuer-Regel-Einrichtung ständig zu beobachten. Wenn das Referenzsignal um einen vorher definierten Wert vom ursprünglich eingestellten Wert der Erstkalibrierung abweicht, werden alle Signale durch eine elektronisch einstellbare Verstärkungsregelung auf die ursprüngliche Signalhöhe gebracht. Fig.10 zeigt den Originalverlauf des Referenzsignals (27), den durch Alterung oder Temperaturdrift geschwächten Verlauf (28) sowie den durch die elektronisch einstellbare Verstärkung korrigierten Signalverlauf (29). Durch diese Maßnahme bleibt der volle Bereich der Signaldynamik erhalten.

## Patentansprüche

1. Vorrichtung zur Analyse der im Abgas von Kraftfahrzeugen befindlichen wichtigsten umweltrelevanten Substanzen, wie Kohlenmonoxid, CO), Kohlenwasserstoffe, HC, und Stickstoffmonoxid, NO, mit dem Ziel der Kontrolle der Verbrennungsvorgänge im Motor und im Katalysator, sowie der frühzeitigen Erkennung und Korrektur der Fehler,
wobei sie die über den über den eingestellten Grenzwert hinausgehende Zunahme der Schadstoffemission anzeigt und somit eine Hilfe leistet, Fehler im Verbrennungs- und im Abgasnachbehandlungssystem frühzeitig zu erkennen, weitere Folgeschäden und den unnötigen Mehrverbrauch zu vermeiden sowie Defekte von einer Fachwerkstatt rechtzeitig beheben zu lassen, bzw. das umweltbewusste Verhalten der Bürger dadurch zu verstärken, dass der Ausstoß umweltrelevanter Schadstoffe angezeigt und dadurch eine selbetwillige Geschwindigkeitsbegrenzung bewirkt ist,
wobei die Messung nach dem Verfahren der infraroten Gasabsorption erfolgt, wobei die aus Edelstahl bestehende Küvette eine relativ große optische Weglänge aufweist, sie mit dem Abgas des Kraftfahrzeuges beströmt ist und mit dem Licht einer speziellen Infrarotquelle, bestehend aus einem transparenten Kolben, durchsetzt ist, ein Detektor das Licht der Strahlungsquelle nach dem Messkanal/Referenzkanal-Prinzip empfängt und daraus ein Quotient zur Messwertermittlung gebildet ist und wobei
die Nullpunkteinstellung des Messgerätes für die HC- und CO-Konzentration mit sauberer Umgebungsluft durch ständige, kurzzeitige Umschaltpausen erfolgt, wobei eine Empfindlichkeitseinstellung durch die Anlehnung an die natürliche CO₂-Konzentration in sauberer Umgebungsluft, 350 ppm Normalwert, oder den CO₂-Anteil im Abgas möglich ist.

2. Vorrichtung zur Analyse der im Abgas von Kraftfahrzeugen befindlichen wichtigsten umweltrelevanten Substanzen, wie Kohlenmonoxid, CO, Kohlenwasserstoffe, HC, und Stickstoffmonoxid, NO, mit dem Ziel der Kontrolle der Verbrennungsvorgänge im Motor und im Katalysator, sowie der frühzeitigen Erkennung und Korrektur der Fehler,
wobei sie die über den eingestellten Grenzwert hinausgehende Zunahme der Schadstoffemission anzeigt und somit eine Hilfe leistet, Fehler im Verbrennungs-und im Abgasnachbehandlungssystem frühzeitig zu erkennen, weitere Folgeschäden und den unnötigen Mehrverbrauch zu vermeiden sowie Defekte von einer Fachwerkstatt rechtzeitig beheben zu lassen, bzw. das umweltbewusste Verhalten der Bürger dadurch zu verstärken, dass der Ausstoß umweltrelevanter Schadstoffe angezeigt und dadurch eine selbstwillige Geschwindigkeitsbegrenzung bewirkt ist,
wobei die Messung nach dem Verfahren der infraroten Gasabsorption erfolgt, wobei die aus Edelstahl bestehende Küvette eine relativ große optische Weglänge aufweist, sie mit dem Abgas des Kraftfahrzeuges beströmt ist und mit dem Licht einer speziellen Infrarotquelle, bestehend aus einem transparenten Kolben durchsetzt ist, ein Detektor das Licht der Strahlungsquelle nach dem Messkanal-Referenzkanal-Prinzip empfängt und daraus ein Quotient zur Messwertermittlung gebildet ist, und wobei
die Temperaturdrift durch die Bildung der ersten Ableitung des Konzentrationsverlaufs, in der die Sprungfunktionen des Kraftfahrzeugbetriebes von den langsamen Drifteffekten unterschieden werden können, korrigiert ist

3. Vorrichtung nach Anspruch 1 oder 2, wobei das Messsystem am Unterboden des Kraftfahrzeuges, im Kofferraum, in der Karosserie oder an anderen geeigneten Stellen des Kraftfahrzeuges untergebracht ist.

4. Vorrichtung nach einem der Ansprüche 1-3, wobei das in die Konstruktion des Kraftfahrzeugs integrierte Messsystem z. B. aus Entnahmenstelle, Abgasaufbereitung, Analysevorrichtung, Datenleitung und Anzeigeeinheit bestehen kann, wobei die einzelnen Komponenten durch den modularen Aufbau austauschbar sind und auch nachträglich ins Kraftfahrzeug eingebaut werden können, sowie die Abgasaufbereitung so robust und stabil aufgebaut ist, z. B. aus auswechselbarem und durch Ausheizung regenerierbarem Abgasfilter, Magnetventil, Messgaspumpe, Druckminderer und Durchflussmesser, das die Teile gegenüber der durch die im Kraftfahrzeug herrschenden stark schwankenden und rauen Bedingungen verursachten Ruß-, Staub- und Aerosolablagerungen unempfindlich sind.

5. Vorrichtung nach einem der Ansprüche 1-4, wobei die Signalhöhe durch eine, den gleichbleibenden, ungestörten Verlauf des Referenzsignals als Grundlage nehmende, elektronisch einstellbare Verstärkungsregelung nachgestellt ist,

6. Vorrichtung nach einem der Ansprüche 1-5, wobei für ältere Kraftfahrzeuge ein nicht zulassungspflichtiger Nachrüstbausatz vorgesehen ist, welcher aus einer, am Auspuffende befestigten Entnahmesonde, einer Analysevorrichtung mit Abgasaufbereitung im Kofferraum und einer Anzeigeeinheit am Armaturenbrett besteht, und dieser Nachrüstbausatz ein, von der Behörde nach Fahrzeugtyp und Baujahr amtlich genehmigtes Kennfeld als Vergleichsgrundlage für die On-Board-Messungen enthält, wobei am Kraftfahrzeug, mit Ausnahme von speziellen Oldtimer-Kraftfahrzeugen, keine unmittelbaren messtechnischen Bestimmungen für die Festlegung des spezifischen Kennfeldes vorgenommen werden müssen.

7. Vorrichtung nach einem der Ansprüche 1-6, wobei das Messgerät mit Hilfe eines beliebigen Sensors, wie Sitzbelegungssensor, Zündschlosssensor, weitere Schalelemente, eingeschaltet ist, so dass es den Kaltstart von Anfang an messen kann und die Adsorptionsfalle nach den jeweiligen Betriebsbedingungen flexibel steuern kann, so dass Adsorption und Desorption zum optimalen Zeitpunkt ertolgen.

## Claims

1. This is a device for the analysis of the most important environmentally relevant substances present in the exhaust gas of motor vehicles, such as carbon monoxide (CO), hydrocarbons (HC) and nitrogen monoxide (NO). Its object is the control of the ignition process within the engine and catalytic converter and the prompt detection and rectification of any faults.
It is hereby stated that the device indicates increases in contaminant emissions that exceed the pre-set limit values and thus helps to recognise promptly any faults that occur in the ignition and exhaust processing systems. It also helps to avoid consequent damage and unnecessarily excessive fuel consumption, and allows faults to be rectified promptly in the workshop. Finally, it helps increase the public sense of environmental awareness in the sense that the emission of environmentally harmful substances is indicated and can thus bring about a voluntary limitation of driving speeds.
It is hereby stated that measurement is carried out using the principle of infrared gas absorption, with an optical cell made of stainless steel and with a relatively high optical path length. Vehicle exhaust gas is allowed to flow through this device and is subjected to the light from a special infrared source, consisting of a transparent tube. A detector picks up this light according to the measuring channel/reference channel principle and extracts a ratio, which is used to determine the reading.
It is hereby claimed that the zero point adjustment of the measuring device for HC and CO concentrations is carried out with clean ambient air using constant, brief switchover pauses. This permits sensitivity adjustment dependant either on the natural CO₂ concentration in ambient air (normal value: 350ppm) or the CO₂ component of the exhaust gas.

2. This is a device for the analysis of the most important environmentally relevant substances present in the exhaust gas of motor vehicles, such as carbon monoxide (CO), hydrocarbons (HC) and nitrogen monoxide (NO). Its object is the control of the ignition process within the engine and catalytic converter and the prompt detection and rectification of any faults.
It is hereby stated that the increase in harmful emission exceeding the set limit value is displayed and thus provides an aid for an early detection of defects in the ignition and in the exhaust preparation system, and for avoiding additional subsequent damage and unnecessary surplus consumption as well as for having defects remedied by the garage in time and/or to heighten the awareness of the citizen to act in an environmentally-friendly fashion by displaying the exhaust of environmentally important harmful substances and resulting in a limiting of speed.
It is hereby stated that measurement is carried out using the principle of infrared gas absorption, with an optical cell made of stainless steel and with a relatively high optical path length. Vehicle exhaust gas is allowed to flow through this device and is subjected to the light from a special infrared source, consisting of a transparent tube. A detector picks up this light according to the measuring channel/reference channel principle and extracts a ratio, which is used to determine the reading.
It is hereby claimed that temperature drift is corrected by the production of the first derivation of the concentration curve, in which the step functions of the motor vehicle drive system can be differentiated from the slow drift effects.

3. Device in accordance with claim 1 or 2 in which the measuring system can be accommodated in the underside of the vehicle, in the boot, in the car body or in another suitable location of the vehicle.

4. A device in accordance with claims 1 -3 in which the measuring system built into the vehicle can consist, for example, of a sampling point, exhaust processing unit, analysing device, data link and display unit. Individual components can be replaced due to the modular design of the unit and can also be built into the vehicle as later modifications. The exhaust processing unit consists of replaceable parts (which can also be regenerated by heating) such as exhaust filters, solenoid valves, measuring gas pumps, pressure reducers and flow meters. It is sufficiently stable and robust for these components to withstand the sharply fluctuating and tough conditions present in the vehicle, such as soot, dust and aerosol deposits.

5. Device in accordance with claims 1 - 4 in which the signal strength is readjusted by means of an electronically regulated control system, based on the constant, undisturbed reference signal curve.

6. Device in accordance with one of the claims 1 - 5 in which a modification kit, which does not require official approval, is available for older vehicles. This consists of a sampling sensor attached to the end of the exhaust pipe, an exhaust gas processing unit installed in the car boot and a display unit fitted to the dashboard. This modification kit possesses officially authorised performance characteristics, according to the model and year of construction of each vehicle, as the base of comparison for on board measurement. This means that, with the exception of vehicles recognised as vintage cars, no immediate measurements need be made to determine the specific performance characteristics.

7. Device in accordance with one of the claims 1 - 6 in which the measuring device is activated, with the help of any type of sensor (e.g. seat occupation sensors, ignition lock sensors), along with other activated elements. This means that measurement can begin at the moment of cold-starting and that flexible control of the adsorption trap according to current operating conditions is possible - allowing adsorption and desorption to take place at exactly the right moment.

## Revendications

1. Dispositif pour l'analyse des principales substances présentes dans les gaz d'échappement des véhicules à moteur et significatives pour l'environnement, telles que monoxyde de carbone CO, hydrocarbures HC et monoxyde d'azote NO, dans le but de contrôler les processus de combustion dans le moteur et dans le pot catalytique, ainsi que la reconnaissance précoce et la réparation des défauts,
ce dispositif signalant l'augmentation des émissions de matières polluantes au-delà des valeurs limites fixées et aidant par le fait même à reconnaître très tôt des défauts dans le système de combustion et de traitement ultérieur des gaz d'échappement, à éviter les détériorations subséquentes et le surplus inutile de consommation, ainsi qu'à faire réparer à temps les défauts par un garage spécialisé, de même qu'à renforcer le comportement écologique des usagers par un signalement de l'échappement de matières polluantes provoquant alors une limitation de la vitesse,
la mesure s'effectuant d'après le procédé de l'absorption des infrarouges par les gaz, la cuvette existante en acier inoxydable et présentant une distance optique suffisante étant parcourue par les gaz d'échappement du véhicule et traversée par la lumière d'une source spéciale d'infrarouges qui est formé d'un tube transparent, un détecteur captant la lumière de la source de rayonnement, d'après le principe canal de mesure/canal de référence, et un quotient étant formé pour l'estimation des valeurs mesurées, et
la définition du point zéro de l'appareil de mesure pour la concentration en HC et CO par rapport à l'air propre ambiant étant assurée par de continuelles et courtes interruptions permettant un réglage de sensibilité par comparaison avec la concentration naturelle en CO₂ dans l'air propre ambiant, d'une valeur nominale de 350 ppm et la proportion de CO₂ dans les gaz émis.

2. Dispositif pour l'analyse des principales substances présentes dans les gaz d'échappement des véhicules à moteur et significatives pour l'environnement, telles que monoxyde de carbone CO, hydrocarbures HC et monoxyde d'azote NO, dans le but de contrôler les processus de combustion dans le moteur et dans le pot catalytique, ainsi que la reconnaissance précoce et la correction des défauts,
la mesure s'effectuant d'après le procédé de l'absorption des infrarouges par les gaz, la cuvette existante en acier inoxydable et présentant une distance optique suffisante étant parcourue par les gaz d'échappement du véhicule et traversée par la lumière d'une source spéciale d'infrarouges qui est formé d'un tube transparent, un détecteur captant la lumière de la source de rayonnement, d'après le principe canal de mesure/canal de référence, et un quotient étant formé pour l'estimation des valeurs mesurées, et
la dérive de température étant corrigée par le calcul de la première dérivée de l'évolution de la concentration dans laquelle les fonctions de sauts dans la marche du véhicule peuvent être différenciées des effets de dérive lents.

3. Dispositif selon la revendication 1 ou 2 pour laquelle le système de mesure est situé sous le véhicule, dans le coffre à bagages, à l'intérieur de la carrosserie ou dans quelque autre endroit approprié du véhicule.

4. Dispositif selon une des revendications 1 à 3 dans laquelle le système de mesure intégré dans la construction du véhicule peut se composer par exemple d'un point de prélèvement, d'un traitement des gaz d'échappement, d'une transmission des données et d'une unité de signalisation, les différents composants étant échangeables de par leur conception modulaire et pouvant également être montés ultérieurement sur le véhicule, et que le système de traitement des gaz d'échappement est construit de façon si robuste et si résistante, p. ex. avec un filtre remplaçable et régénérable par échauffement, une vanne magnétique, une pompe de mesure des gaz, un détendeur et un débimètre, de telle sorte que les pièces sont insensibles aux dépots de suie, de poussières et d'aérosols occasionnés par les conditions extrêmes et fortement variables qui règnent dans le véhicule.

5. Dispositif selon une des revendications 1 à 4 dans lequel la hauteur du signal est ajustée par une régulation d'amplification réglable électroniquement qui se base sur le comportement toujours identique et non perturbé du signal de référence.

6. Dispositif selon une des revendications 1 à 5 dans lequel un équipement à installer ultérieurement, non soumis à l'homologation, est prévu pour les véhicules non-récents, équipement qui comprend une sonde de prélèvement fixée en bout du tuyau d'échappement, un dispositif d'analyse et de traitement des gaz logé dans le coffre et une unité de signalisation sur le tableau de bord, et que cet équipement comprend un champ d'identification de caractéristiques, homologué par les autorités compétentes, selon le type et l'année de fabrication du véhicule, comme base de comparaison pour les mesures on-board, étant entendu que sur le véhicule aucune prescription directe sur la technique de mesure n'est prévue pour la détermination du champ spécifique des caractéristiques, à l'exception de certains véhicules oldtimer.

7. Dispositif selon une des revendications 1 à 6 dans lequel l'appareil de mesure est mis en route à l'aide d'un détecteur quelconque, tel qu'un capteur d'occupation du siège, de la serrure de contact ou autres éléments de contact, de sorte que cet appareil puisse dès le début mesurer le départ à froid et commander le piège d'adsorption de façon souple suivant les conditions de marche afin qu'adsorption et désorption puissent être effectuées à un moment optimal.
